# EUROPEAN PATENT APPLICATION

(11) **EP 4 379 870 A1**
(43) Date of publication of application: **05.06.2024**
(21) Application number: 23191385.6
(22) Date of filing: 14.08.2023
(51) Int. Cl.: H01M 4/86, H01M 4/88, H01M 4/90, H01M 4/92

(54) **OXIDATION-RESISTANT CATALYST FOR FUEL CELL, METHOD OF MANUFACTURING THE SAME, AND FUEL CELL INCLUDING THE SAME**

(30) Priority: 30.11.2022 KR 20220164278; 30.01.2023 KR 20230011983
(71) Applicant: Korens RTX Co., Ltd., Gyeryong-si, Chungcheongnamdo 32842 (KR)
(72) Inventor: YANG, Dae Soo, 34159 Daejeon (KR); PARK, Hyean Yeol, 34049 Daejeon (KR); KANG, Tong Hyun, 34209 Daejeon (KR)
(74) Representative: AWA Sweden AB

(57) **Abstract**

Provided are an oxidation-resistant catalyst for fuel cells, a manufacturing method thereof, and a fuel cell including the same. In the case of the catalyst for a fuel cell according to the present disclosure, the fuel cell catalyst according to the present disclosure has oxidation-resistant features of a metal oxide while maintaining the electrical conductivity of a carbon support. Accordingly, catalytic activity of platinum particles, which are the active points in fuel cells, can be improved, and metal oxides can prevent platinum particles from directly interacting with carbon supports, thereby resolving the problem of carbon corrosion at the platinum/carbon interface.

## Description

### Technical Field

The present disclosure relates to an oxidation-resistant catalyst, and more particularly, to an oxidation-resistant catalyst for fuel cells, in which a catalyst support is suitable for application to fuel cells and has excellent electrical conductivity, a method of preparing the same, and a fuel cell using the same.

### Background Art

Hydrogen, which is attracting attention as a next-generation eco-friendly energy source, is a power source that will lead the transition to a hydrogen economy society, and as one of these power sources, a polymer electrolyte membrane fuel cell (PEMFC) is an energy conversion device that can convert chemical energy into electrical energy that can be used for transportation and building power generation by using electricity generated in the process of combining hydrogen and oxygen, which are fuels.

The operating principle of fuel cells is that fuel (hydrogen, methanol, etc.) is fed to an anode, where the fuel is oxidized by a catalyst, while electrons are released and conducted through an external load to a cathode, where the oxidant is reduced by a catalyst again to produce water, generating electricity (non-patented reference, Yun Wang et al., Applied Energy 88 (2011) 981-1007).

The main fields of research for fuel cell catalysts are research on manufacturing catalysts in a size of several nanometers in order to increase their activity, and research on causing material transfer with high efficiency by evenly supporting them on a carbon carrier having a high specific surface area. In this case, carbon carriers maximize the reaction efficiency by inducing high-dispersion supporting of platinum nanoparticles, which are the active points of the catalyst, and smoothly transfer the electrons generated by the catalytic reaction to output devices.

In general, carbon black is used as the carbon carrier. However, during the starting and stopping process of fuel cell operation, outside air entering the electrode is mixed with hydrogen, which is the fuel, and a high potential of more than 1.2 V affects the carbon, and a potential higher than 0.207 V, the standard potential for carbon oxidation, causes carbon corrosion. This reduces the performance and lifespan of the fuel cell.

As a countermeasure, attempts are being made to increase the crystallinity of the carbon carrier surface by high-temperature graphitization to increase the inherent oxidation initiation temperature of carbon, thereby suppressing corrosion caused by fuel cell electrode degradation.

Alternatively, metal oxides with high resistance to oxidation, such as CeO₂, SiO₂, NiO, SnO₂, TiO₂, ZrO₂, Ga₂O₂, are considered alternatives to carbon supports, and TiO₂ has been widely studied as a catalyst support due to low costs, abundance, non-toxicity, and high stability to acid bases.

In particular, TiO₂₋supported Pt catalysts show higher catalytic stability compared to carbon-based supported catalysts after catalyst degradation protocols due to the high oxidation resistance of TiO₂, and TiO₂ support is considered to be a material that ultimately increases electrochemical durability.

However, Pt/TiO₂ catalyst exhibits low redox activity, which is likely due to the suppression of the migratory flow of electrons, which are generated during the redox reaction, by the low electrical conductivity of the insulating properties of TiO₂.

In order to complement the insulating properties of TiO₂, studies are being conducted to physically mix relatively highly conductive carbon with TiO₂ to increase the electron transfer efficiency. However, micron-sized TiO₂ and carbon aggregates are inhomogeneously mixed, causing defects in the electron transfer channels in the electrode and eventually causing performance degradation of the membrane electrode assembly.

### Content of Disclosure

### Technical Problem

An objective of the present disclosure is to provide an oxidation-resistant catalyst for fuel cells in which a catalyst support has excellent electrical conductivity and a method of producing the same.

### Technical Solution to Problem

An aspect of the present disclosure provides a method of producing a catalyst for a fuel cell includes forming a carbon support dispersion solution, forming a first metal precursor-mixed solution by mixing a solution of a first metal precursor with the carbon support dispersion solution, supporting a first metal by irradiating an electron beam on the first metal precursor-mixed solution, injecting a second metal precursor into a first metal-supported mixed solution, supporting a second metal by irradiating an electron beam on a second metal precursor-injected mixed solution, and obtaining a second metal-supported carbon support.

In an embodiment, the carbon support may include at least one selected from reduced graphene oxide, graphene, graphite, single-walled carbon nanotubes, multi-walled carbon nanotubes, carbon nanohorns, carbon nanofibers, acetylene black, and furnace black.

In an embodiment, the first metal precursor may include, as a metal oxide precursor, at least one of precursors of oxides selected from TiO₂, SnO₂, ZnO, VO₂, In₂O₂, NiO, MoO₂, WO₂, and CuO.

In an embodiment, the first metal precursor may include at least one selected from TiCl₄, C₁₂H₂₈O₄Ti, Ti(OC₂H₅)₄, Ti(OBu)₄, C₁₂H₂₈O₄Ti, and [(CH₃)₂CHO]₂Ti(C₅H₇O₂)₂.

In an embodiment, in the forming of the first metal precursor-mixed solution, a pH of the first metal precursor-mixed solution may be adjusted to be basic.

In an embodiment, in the supporting of the first metal, the electron beam may be irradiated for 30 minutes or less.

In an embodiment, in the supporting of the first metal, the size of the first metal which is supported may be 50 nm or less.

In an embodiment, the second metal precursor may be a platinum (Pt) precursor.

In an embodiment, the second metal precursor may be injected in-situ.

In an embodiment, in the injecting of the second metal precursor, a pH of the mixed solution may be adjusted to be basic.

In an embodiment, in the supporting of the second metal, the electron beam may be irradiated for 20 minutes or less.

In an embodiment, the obtaining the second metal-supported carbon support may include filtering and then drying the mixed solution to which the electron beam has been irradiated.

Another aspect provides a catalyst for a fuel cell, prepared by using the method.

Another aspect provides a fuel cell including the catalyst for a fuel cell.

### Advantageous Effects of Disclosure

The fuel cell catalyst according to the present disclosure has oxidation resistance characteristics of metal oxide while maintaining electrical conductivity of the carbon support. Accordingly, catalytic activity of platinum particles, which are the active points in fuel cells, can be improved, and metal oxides can prevent platinum particles from directly interacting with carbon supports, thereby resolving the problem of carbon corrosion at the platinum/carbon interface.

### Brief Description of Drawings

FIG. 1 is a flowchart sequentially illustrating a method of manufacturing a fuel cell catalyst according to an embodiment of the present disclosure.
FIGS. 2A to 2C schematically illustrate a conventional fuel cell catalyst and a fuel cell catalyst according to an embodiment of the present disclosure.
FIGS. 3A to 3D show transmission electron microscope (TEM) images of a fuel cell catalyst according to an embodiment of the present disclosure and a fuel cell catalyst of the related art.
FIG. 4 shows an X-ray diffraction (XRD) result of a TiO₂-supported carbon support according to an embodiment of the present disclosure.
FIG. 5 shows the results of thermogravimetric analysis (TGA) for the TiO₂-supported carbon support according to an embodiment of the present disclosure.
FIG. 6 shows the results of TGA analysis of commercial carbon black and a fuel cell catalyst according to an embodiment of the present disclosure.
FIGS. 7A and 7B show results of analyzing the performance of a fuel cell catalyst according to an embodiment of the present disclosure and a fuel cell catalyst of the related art.
FIG. 8 shows the results of evaluating electrical conductivity of: a TiO₂ - supported carbon support according to an embodiment of the present disclosure; and a mixture in which TiO₂ is supported on a carbon support of the related art.

### [Specific content for implementing the invention]

an embodiment of the present disclosure is shown in the accompanying drawings. However, this inventive concept may be embodied in many different forms, and should not be construed as being limited to the embodiments described herein. Rather, these embodiments are provided so that this disclosure will be thorough and complete, and will fully convey the scope of the inventive concept to those skilled in the art. Like reference numerals denote like components.

Terms used in this specification are for describing only specific embodiments and are not intended to limit the present inventive concept. The singular form used herein is intended to include the plural form including "at least one" unless the context clearly dictates otherwise. "At least one" should not be construed as limiting to the singular. The term "and/or" used herein includes a combination of one or more of the listed items. The terms "including" and/or "comprising" as used in the Detailed Description specify the presence of the stated features, areas, integers, processes, actions, components, and/or ingredients and do not preclude the presence or addition of one or more other features, areas, integers, processes, actions, components, ingredients, and/or groups thereof.

Unless defined otherwise, all terms (including technical and scientific terms) used herein have the same meaning as commonly understood by one of ordinary skill in the art to which this disclosure belongs. It will also be understood that terms, as defined in commonly used dictionaries, are to be construed to have a meaning consistent with their meaning in the context of the relevant art and this disclosure, and are not to be construed in an idealized or overly formal sense.

While particular embodiments have been described, currently unforeseen or unforeseen alternatives, modifications, variations, improvements and substantial equivalents may occur to applicants or those skilled in the art. Accordingly, the appended claims as filed and as may be amended are intended to embrace all such alternatives, modifications, variations, improvements and substantial equivalents.

In the following embodiments, terms such as first and second are not intended to be limiting, but are used to distinguish one component from another.

In the following embodiments, singular expressions include plural expressions unless the context clearly indicates otherwise.

When an embodiment is otherwise implementable, a specific process sequence may be performed differently from the described sequence. For example, two processes described in succession may be performed substantially simultaneously, or may be performed in an order reverse to the order described.

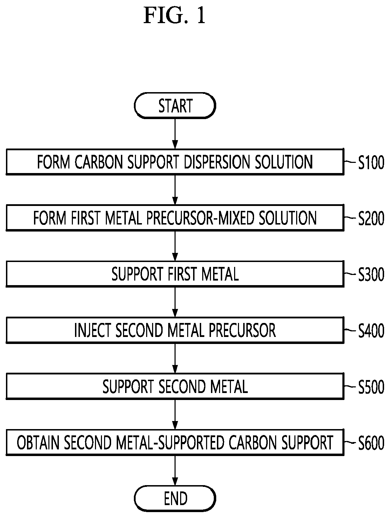

FIG. 1 is a flowchart sequentially illustrating a method of manufacturing a fuel cell catalyst according to an embodiment of the present disclosure.

Referring to FIG. 1, the present disclosure provides a method of producing a catalyst for a fuel cell, the method including forming a carbon support dispersion solution (S100), forming a first metal precursor-mixed solution (S200), supporting a first metal (S300), injecting a second metal precursor (S400), supporting a second metal (S500), and obtaining a second metal-supported carbon support (S600).

In an embodiment of the present disclosure, the forming the carbon support dispersion solution (S100) may be dispersing a carbon support in a solvent.

In an embodiment, the carbon support may include at least one carbon support selected from reduced graphene oxide, graphene, graphite, single-walled carbon nanotubes, multi-walled carbon nanotubes, carbon nanohorns, carbon nanofibers, acetylene black, and furnace black.

The solvent may be a mixed solvent including water and alcohol. The alcohol included in the solvent may be a polyhydric alcohol, and may include at least one selected from acetone, ethanol, isopropyl alcohol, ethanol, n-propyl alcohol, butanol, ethylene glycol, diethylene glycol, and glycerol.

A commonly used dispersion process may be used to prepare the carbon support dispersion solution, and for example, an ultrasonic dispersion process may be used. This dispersing process may be performed under the conditions including 3 seconds of operation-1 second of stop and the Amplitude intensity of 50% or less.

In the forming a first metal precursor-mixed solution (S200), a solution of a first metal precursor is mixed with the carbon support dispersion solution to form the first metal precursor-mixed solution.

The first metal precursor may include, as a precursor of a metal oxide, one or more precursors of oxides selected from TiO₂, SnO₂, ZnO, VO₂, In₂O₂, NiO, MoO₂, WO₂, and CuO. For example, the first metal precursor may include one or more selected from TiCl₄, C₁₂H₂₈O₄Ti, Ti(OC₂H₅)₄, Ti(OBu)₄, C₁₂H₂₈O₄Ti, and [(CH₃)₂CHO]₂Ti(C₅H₇O₂)₂, but is not limited thereto.

The first metal precursor-mixed solution may be formed by injecting the first metal precursor solution into the carbon support dispersion solution. The injection rate may be 5 mL/min to 20 mL/min.

Meanwhile, the pH of the first metal precursor-mixed solution may be adjusted to be basic.

In this regard, any method can be used as long as the method can adjust the pH. The pH can be adjusted by metering injecting a pH adjusting agent. At least one of conventional pH adjusting agents such as NaOH, KOH, and aqueous ammonia may be used, but embodiments are not limited thereto. For example, the pH range may be a pH of 7 to 14. In an embodiment, the pH may be adjusted to be 7 to 8 by using 1 M NaOH.

In the supporting the first metal (S300), an electron beam may be irradiated to the first metal precursor-mixed solution.

The electron beam may have energy of 0.1 MeV to 2 MeV, and an applied current may be 0.1 mA to 20 mA. When an electron beam is irradiated under the above conditions, ions of the first metal are reduced and the first metal is supported on the carbon support.

The irradiation time of the electron beam may be at least 1 minute and not more than 30 minutes; at least 1 minute and not more than 25 minutes; at least 1 minute and not more than 20 minutes; at least 1 minute and not more than 15 minutes; at least 1 minute and not more than 10 minutes; or at least 1 minute and not more than 5 minutes. For example, the irradiation time of the electron beam may be at least 1 minute and not more than 5 minutes.

In the irradiating the electron beam, the electron beam may be irradiated for an appropriate time according to the type of the first metal.

In the supporting the first metal, the size of the supported first metal may be 1 nm to 50 nm; 1 nm to 40 nm; 1 nm to 30 nm; 1 nm to 20 nm; 1 nm to 10 nm; 5 nm to 50 nm; 5 nm to 40 nm; 5 nm to 30 nm; 5 nm to 20 nm; 5 nm to 10 nm; 10 nm to 50 nm; 10 nm to 40 nm; 10 nm to 30 nm; 10 nm to 20 nm; 15 nm to 50 nm; 15 nm to 40 nm; 15 nm to 30 nm, or 15 nm to 20 nm.

When the first metal is supported in these size ranges, the physical distance thereof to the carbon support becomes small and the moving distance of electrons is shortened, thereby addressing the issue of low electrical conductivity of the first metal.

In the injecting the second metal precursor (S400), the second metal precursor may be injected into the first metal precursor-mixed solution in which the first metal is supported.

The second metal precursor may be a platinum (Pt) precursor. The Pt precursor may include at least one of H₂PtCl₆, H₆Cl₂N₂Pt, PtCl₂, PtBr₂, platinum acetylacetonate, K₂(PtCl₄), H₂Pt(OH)₆, Pt(NO₃)₂, [Pt(NH₃)₄]Cl₂, [Pt(NH₃)₄](HCO₃)₂, [Pt(NH₃)₄](Oac)₂, (NH₄)₂PtBr₆, (NH₃)₂PtCl₆, and hydrates thereof. However, embodiments are not limited thereto.

The injecting of the second metal precursor may be injecting in-situ, but is not limited thereto. The injection rate may be 5 mL/min to 20 mL/min.

According to an embodiment, when platinum ions are injected in-situ, the reduction of platinum is induced by continuously generated accelerated electrons to synthesize an oxidation-resistant catalyst support in a short time, resulting in a highly durable fuel cell catalyst.

The injecting the second metal precursor may include adjusting the pH of the mixed solution to be basic. In this regard, any method can be used as long as the method can adjust the pH. The pH can be adjusted by metering injecting a pH adjusting agent. At least one of conventional pH adjusting agents such as NaOH, Na₂CO₃, KOH, K₂CO₃, or H₂SO₄ may be used, but embodiments are not limited thereto. For example, the pH range may be a pH of 7 to 14. In an embodiment, the pH may be adjusted to be 10 to 11 by using 1 M NaOH.

In the supporting the second metal (S50), an electron beam may be irradiated to the second metal precursor-mixed solution to alloy the second metal.

The electron beam may have energy of 0.1 MeV to 2 MeV, and an applied current may be 0.1 mA to 20 mA. When an electron beam is irradiated under the above conditions, ions of the second metal are reduced and the second metal is alloyed on the carbon support.

The irradiation time of the electron beam may be at least 10 seconds and not more than 20 minutes; at least 10 seconds and not more than 15 minutes; at least 10 seconds and not more than 10 minutes; at least 10 seconds and not more than 5 minutes; at least or 10 seconds and not more than 1 minute. For example, the irradiation time of the electron beam may be at least 1 minute. The electron beam may be irradiated for an appropriate time according to the type of the second metal.

The obtaining the second metal-supported carbon support (S600) may be obtaining a catalyst for a fuel cell in which the second metal is supported. This process may include filtering and then drying the precursor mixture solution which has been irradiated with the electron beam. The method of filtration is not particularly limited. For example, a vacuum filter may be used for the filtering. The method of drying is not particularly limited. For example, drying may be performed in an oven. In an embodiment, when drying in an oven, drying may be performed at a temperature of not more than 100 °C, for example, 60 °C.

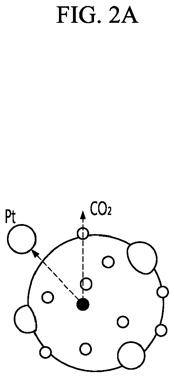

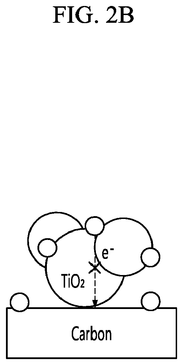

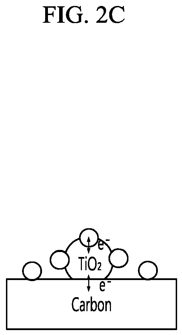

FIGS. 2A to 2C are diagrams schematically showing a fuel cell catalyst of the related art and a fuel cell catalyst according to an embodiment of the present disclosure. FIG. 2A shows a diagram of a platinum/carbon catalyst of the related art, FIG. 2B shows a diagram of a catalyst in which platinum is supported by a physically mixed TiO₂/ carbon support, and FIG. 2C shows a diagram of a fuel cell catalyst according to the present disclosure.

In the case of the platinum/carbon catalyst illustrated in FIG. 2A, it is known that during accelerated degradation, oxidation of the carbon support causes platinum metal to elute and agglomerate, leading to accelerated utilization and degradation of platinum.

FIG. 2B illustrates a catalyst in which platinum is supported after simply mixing micron-sized TiO₂ agglomerates with a carbon support. Carbon and TiO₂ agglomerates are non-uniformly mixed, and thus, due to the TiO₂ agglomerates, which are considered as insulators, the passage of electrons generated during the oxygen reduction reaction is inhibited and performance degradation may occur.

On the other hand, as shown in FIG. 2C, in the case of a fuel cell catalyst prepared by electron beam irradiation according to an embodiment of the present disclosure, TiO₂ particles are nano-sized to reduce the physical distance to carbon, which has the effect of shortening the electron travel distance, thereby solving the low electrical conductivity of TiO₂. Moreover, by preventing the platinum particles from directly interacting with the carbon support, the corrosion of carbon at the platinum/carbon interface, which is known to reduce the durability of conventional catalysts, can be addressed.

Another aspect of the present disclosure provides a catalyst for a fuel cell manufactured by the manufacturing method and a fuel cell including the catalyst for a fuel cell.

The fuel cell may be a polymer electrolyte fuel cell, and a membrane electrode assembly of the polymer electrolyte fuel cell may include an anode, a cathode, and a polymer electrolyte membrane therebetween, and at least one of the anode and the cathode may include the catalyst of the present disclosure.

Hereinafter, the present disclosure will be described in detail through experimental examples.

However, the experimental examples to be described later are only to specifically illustrate the present disclosure in one aspect, and the present disclosure is not limited thereto.

### <Experimental Example 1> Transmission Electron Microscope (TEM) Analysis

TEM analysis was performed on a fuel cell catalyst in which TiO₂ sized at least 50 nm was physically mixed with a carbon support, followed by supporting platinum (Comparative Example), and a fuel cell catalyst in accordance with an embodiment of the present disclosure (Example).

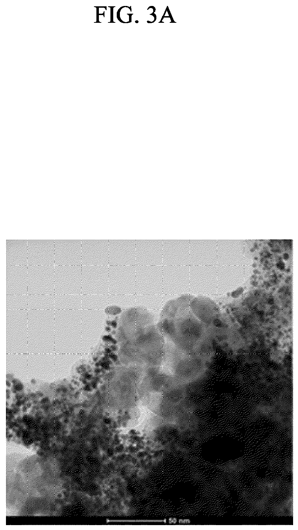

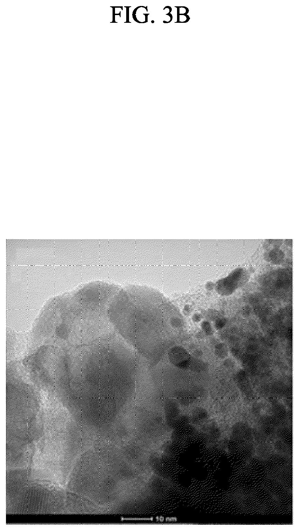

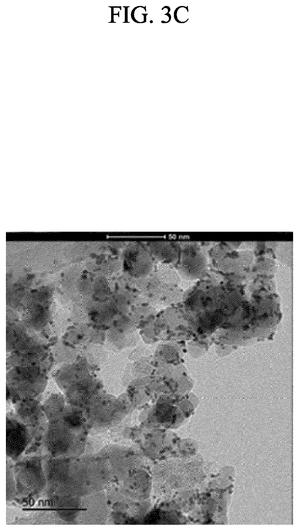

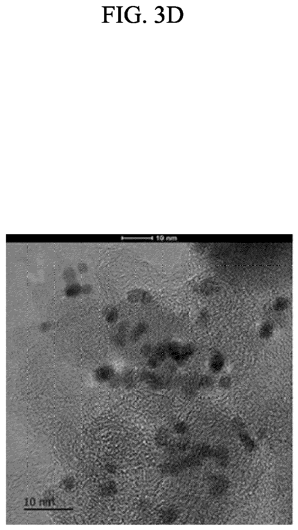

The experimental results are shown in FIGS. 3A and 3B for Comparative Example and in FIGS. 3C and 3D for Example.

Referring to FIGS. 3A and 3B, micron-sized TiO₂ is non-uniformly present in the carbon support, and platinum particles are non-uniformly supported on the TiO₂ and the carbon surface. As a result, as shown in FIG. 2B, it is believed that the platinum catalyst supported on the surface of TiO₂ having insulator properties may eventually lead to a loss of electrochemical performance due to the inhibition of the transfer pathway of electrons generated during the oxygen reduction reaction.

On the other hand, FIGS. 3C and 3D, it was observed that TiO₂ nanoparticles with a size of about 10 nm were uniformly mixed on the carbon support, and platinum particles were also uniformly supported in the nanosized TiO₂/C composite. As shown in FIG. 2C, since TiO₂ is uniformly supported, aggregation between metals can be suppressed during the preparation of the platinum catalyst. In addition, by nano-sizing the particle size of TiO₂, it is expected to reduce the electrical resistance and suppress the loss of electrochemical performance by shortening the transfer pathway of electrons generated during the oxygen reduction reaction on the platinum surface.

### <Experimental Example 2> X-ray diffraction pattern analysis (XRD)

XRD pattern analysis was performed on TiO₂₋supported carbon support (TiO₂/C) according to an example of present disclosure, and the experimental method is as follows.

X-ray diffraction pattern analysis was performed on the carbon support at 40 kV and 20 mA using a Rigaku 1200, a Cu-Kα light source, and a Ni β-filter. The average grain size of carbon was determined using the Debye-Scherer equation from the 2θ reflection peak for the graphite lattice plane.

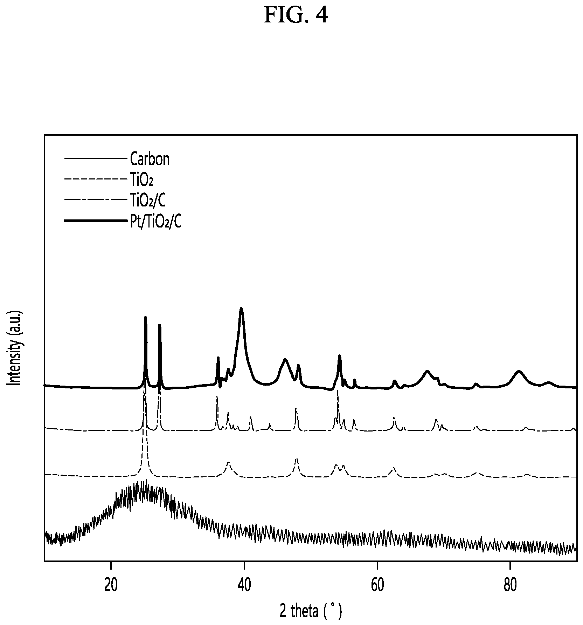

The experimental results are shown in FIG. 4. Referring to FIG. 4, in the case of the synthesized TiO₂/C complex, the phase of Anatase TiO₂ was identified, and after platinum was supported (Pt/TiO₂/C), the face-centered cubic (fcc) structure of platinum was identified at 39.6°, 46.1°, 67.1°, and 80.9°.

### <Experimental Example 3> Thermogravimetric analysis (TGA)

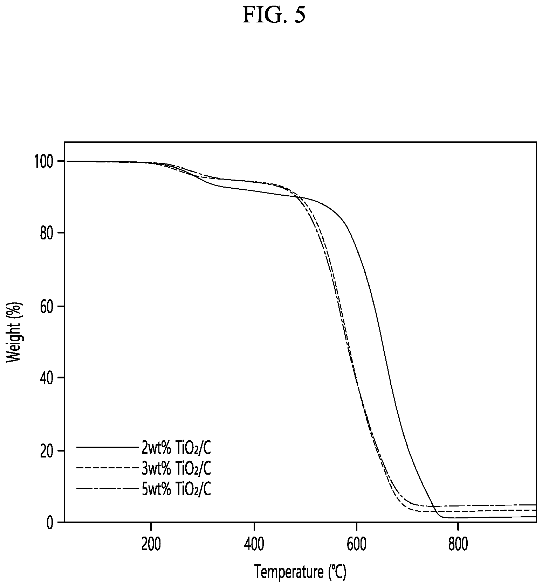

TGA analysis was performed on TiO₂₋supported carbon support (TiO₂/C) according to an embodiment of present disclosure while controlling the content of TiO₂, and the experimental method is shown in FIG. 5. Referring to FIG. 5, it can be seen that 2.05 wt%, 3.14 wt%, and 5.1 wt. Titanium dioxide were supported.

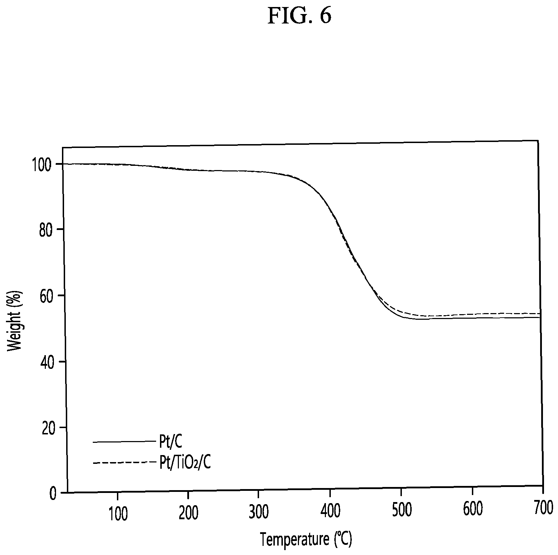

TGA was performed on a catalyst in which 50 wt% platinum was supported by commercial carbon black and a catalyst according to the present disclosure in which Pt is supported by a TiO₂/C composite, and experimental results are shown in FIG. 6. For the TiO₂/C composite, a support containing 3 wt% of TiO₂ was used, and referring to FIG. 6, it can be seen that the TiO₂/C composite used a support containing 3 wt% TiO₂, and the amount of the metal after platinum was supported was found to be 53.05%,

### <Experimental Example 4> Performance evaluation of fuel cell catalyst

With respect to each of a catalyst for a fuel cell (Example, 50 wt% Pt/TiO₂/C) according to an embodiment of the present disclosure and a fuel cell catalyst of the related art (Comparative Example, 50 wt% Pt/C) in which platinum is supported on a carbon carrier of the related art, the performance of unit cells were measured, and obtained measurements were compared.

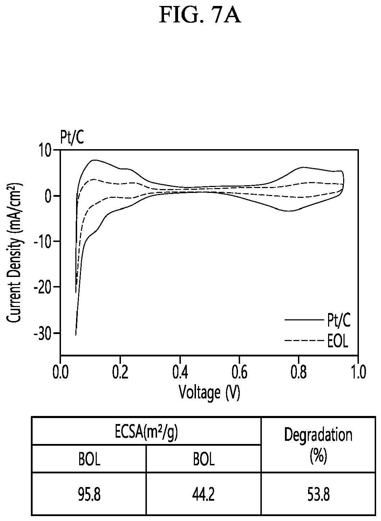

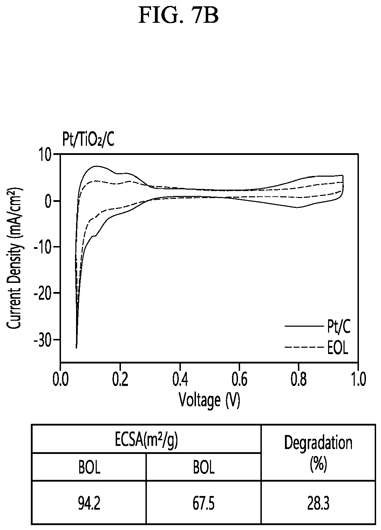

The experimental results are shown in FIGS. 7A and 7B. Referring to FIGS. 7A and 7B, it was confirmed that the initial electrochemical surface area (ECSA) performances of Example and Comparative Example were similar to each other as being 94.2 m²/g and 95.8 m²/g, respectively. That is, the platinum utilization rate was maintained despite the presence of insulating TiO₂.

Thereafter, after additional catalyst deterioration evaluation, the rate of decrease in performance compared to the initial ECSA performance was 28.3% for Example and 53.8% for Comparative Example. This suggests that the nano-sized oxidation-resistant TiO₂ inhibits the corrosion of carbon generated during degradation and improves the durability of the membrane electrode junction while maintaining the dispersion of platinum particles.

### <Experimental Example 5> Evaluation of Electrical Conductivity of Nanonized TiO₂/Carbon Composites

Four-probe conductivity for a nanonized TiO₂/carbon composite (electron beam-based composite, Example) according to an embodiment of the present disclosure and a mixture in which TiO₂ is supported on a carbon support of the related art (carbon-TiO₂ simple mixture, Comparative Example) were compared with each other.

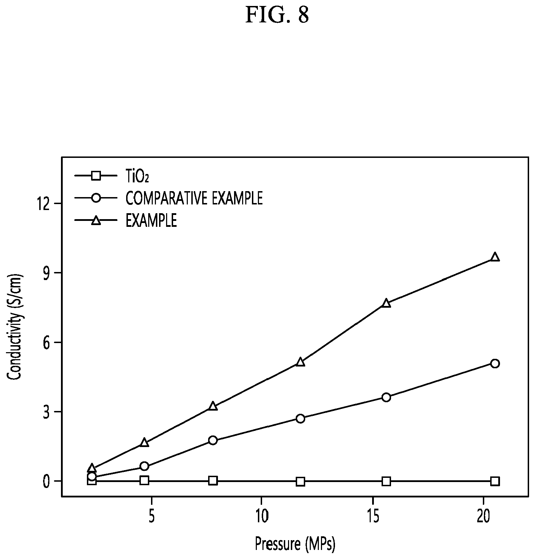

Experimental results are shown in FIG. 8. The electrical conductivity of each catalyst carrier was analyzed with increasing applied pressure. Referring to FIG. 8, it was confirmed that, for each case, the electrical conductivities of TiO₂ oxide were similar to each other as being 8.86 × 10⁻⁵ S/cm from the initial 2.33 × 10⁻⁵ S/cm even as the pressure was increased. This is due to insulating TiO₂.

The initial conductivities of Example and Comparative Examples were found to be 0.52 S/cm and 0.17 S/cm, and when the pressure was increased to 20 MPa, 9.63 S/cm and 5.11 S/cm, respectively. The enhanced electrical conductivity despite the presence of insulating TiO₂ is attributed to the incorporation of carbon into the carrier. In particular, the improvement in electrical conductivity in Example compared to the Comparative Examples is believed to be due to the reduction in the electrical resistance distance by the nano-sized TiO₂, resulting in an improvement in electrical conductivity.

As such, the present disclosure has been described with reference to an embodiment shown in the drawings, but this is merely an example, and those skilled in the art will understand that various modifications and variations of the embodiment can be made therefrom. Therefore, the true technical protection scope of the present disclosure should be determined by the technical spirit of the appended claims.

## Claims

1. A method of producing a catalyst for a fuel cell, the method comprising:
forming a carbon support dispersion solution;
forming a first metal precursor-mixed solution by mixing a solution of a first metal precursor with the carbon support dispersion solution;
supporting a first metal by irradiating the first metal precursor-mixed solution with an electron beam;
injecting a second metal precursor into a first metal-supported mixed solution;
supporting a second metal by irradiating an electron beam on a second metal precursor-injected mixed solution; and
obtaining a carbon support on which the second metal is supported.

2. The method of claim 1, wherein
the carbon support comprises at least one selected from reduced graphene oxide, graphene, graphite, single-walled carbon nanotubes, multi-walled carbon nanotubes, carbon nanohorns, carbon nanofibers, acetylene black, and furnace black.

3. The method of claim 1, wherein
the first metal precursor comprises, as a precursor of a metal oxide,
at least one precursor of oxides selected from TiO₂, SnO₂, ZnO, VO₂, In₂O₂, NiO, MoO₂, WO₂, and CuO.

4. The method of claim 1, wherein
the first metal precursor comprises at least one selected from TiCl₄, C₁₂H₂₈O₄Ti, Ti(OC₂H₅)₄, Ti(OBu)₄, C₁₂H₂₈O₄Ti, and [(CH₃)₂CHO]₂Ti(C₅H₇O₂)₂.

5. The method of claim 1, wherein
in the forming of the first metal precursor-mixed solution, a pH of the first metal precursor-mixed solution is adjusted to be basic.

6. The method of claim 1, wherein in the supporting of the first metal, the electron beam is irradiated for 30 minutes or less.

7. The method of claim 1, wherein in the supporting of the first metal, the size of the first metal which is supported is 50 nm or less.

8. The method of claim 1, wherein the second metal precursor is a platinum (Pt) precursor.

9. The method of claim 1, wherein the second metal precursor is injected by an in-situ method.

10. The method of claim 1, wherein in the injecting of the second metal precursor, a pH of the mixed solution is adjusted to be basic.

11. The method of claim 1, wherein in the supporting of the second metal, an electron beam may be irradiated for 20 minutes or less.

12. The method of claim 1, wherein the obtaining the second metal-supported carbon support comprises filtering and then drying the mixed solution to which the electron beam has been irradiated.

13. A catalyst for a fuel cell, prepared by the method of claim 1.

14. A fuel cell comprising the catalyst of claim 13.
